# EUROPÄISCHE PATENTSCHRIFT

(11) **EP 3 779 350 B1**
(45) Veröffentlichungstag und Bekanntmachung des Hinweises auf die Patenterteilung: **08.03.2023**
(21) Anmeldenummer: 19191522.2
(22) Anmeldetag: 13.08.2019
(51) Int. Cl.: G01B 3/00, G01B 3/20, G01B 5/00

(54) **MESSSCHIEBER**
MEASURING SLIDE
PIED À COULISSE

(43) Veröffentlichungstag der Anmeldung: 17.02.2021
(73) Patentinhaber: Latschbacher GmbH, 4484 Kronstorf (AT)
(72) Erfinder: LATSCHBACHER, Klaus, 4484 Kronstorf (AT)
(74) Vertreter: Patentanwälte Magenbauer & Kollegen Partnerschaft mbB

(56) Entgegenhaltungen:
- EP-A2- 0 940 649
- FR-A1- 2 610 716
- US-A- 5 101 569
- US-A1- 2001 024 123

## Beschreibung

Die Erfindung betrifft einen Messschieber zur Ermittlung eines Längenmaßes, mit einem Grundkörper, der einen ersten Schenkel und einen zweiten Schenkel umfasst, die L-förmig zueinander ausgerichtet sind, wobei der erste Schenkel länger als der zweite Schenkel ausgebildet ist und bereichsweise mit einer Skale versehen ist, sowie mit einem linearbeweglich längs einer Bewegungsachse am ersten Schenkel gelagerten Messarm, der zusammen mit dem zweiten Schenkel eine Längenmessstrecke begrenzt, wobei die Skale auf eine erste Oberfläche einer transparenten Maßverkörperung aufgebracht ist und wobei die transparente Maßverkörperung mit der ersten Oberfläche auf den ersten Schenkel aufgebracht ist.

Aus der EP 0 940 649 A2 ist ein Messgerät bekannt, das eine Einrichtung zum optischen Ablesen von Messwerten umfasst, wobei die Messeinrichtung einen Skalenträger aufweist, der aus einem lichtsammelnden Material hergestellt ist und der die Form eines geradlinig verlaufenden Streifens hat, wobei die Skalen auf der vom Beobachter abgewandten Hauptfläche des Skalenträgers angeordnet sind und wobei die die Skalen bildenden Elemente als lichtreflektierende Flächen ausgebildet sind.

Die Aufgabe der Erfindung besteht darin, einen Messschieber bereitzustellen, der kostengünstig herstellbar ist und der auch rauen Einsatzbedingungen standhält.

Diese Aufgabe wird für einen Messschieber der eingangs genannten Art mit den Merkmalen des Anspruchs 1 gelöst.

Durch die Aufbringung der Skale auf die erste Oberfläche der transparenten Maßverkörperung und die Anordnung der transparenten Maßverkörperung mit der ersten Oberfläche auf dem ersten Schenkel wird gewährleistet, dass mechanische Einwirkungen auf den ersten Schenkel und die daran angebrachte transparente Maßverkörperung, die im Rahmen eines bestimmungsgemäßen Gebrauchs des Messschiebers auftreten können, nicht oder zumindest erst nach sehr langer Nutzungsdauer zu einer Beschädigung der Skale führen. Die Skale ist hierbei durch die Materialstärke der transparenten Maßverkörperung und durch den ersten Schenkel geschützt, mechanische Einwirkungen wie beispielsweise ein Auftreten von Reibung zwischen dem Messschieber und einem zu vermessenden Gegenstand führen demnach nicht zu einer unmittelbaren Beschädigung der Skale. Allenfalls tritt eine Oberflächenbeschädigung der transparenten Maßverkörperung an einer zweiten Oberfläche auf, die der ersten Oberfläche und dem ersten Schenkel abgewandt ist. Hierdurch kann gegebenenfalls die Lesbarkeit der Skale beeinträchtigt werden, die Skale wird jedoch nicht als solche beschädigt. Vorzugsweise ist vorgesehen, dass die zweite Oberfläche parallel zur ersten Oberfläche ausgerichtet ist. Besonders bevorzugt ist vorgesehen, dass die erste Oberfläche und die zweite Oberfläche jeweils als Planflächen ausgebildet sind.

Zweckmäßig ist es, wenn der erste Schenkel eine längs der Bewegungsachse erstreckte, zur Aufnahme der transparenten Maßverkörperung ausgebildete Nut aufweist, wobei die erste Oberfläche der transparenten Maßverkörperung gegenüberliegend zu einem Bodenbereich der Nut angeordnet ist. Durch die Anordnung der transparenten Maßverkörperung in einer Nut kann ein Schutz der transparenten Maßverkörperung vor mechanischen Einflüssen verglichen mit einer Anbringung der transparenten Maßverkörperung auf einer Oberfläche des ersten Schenkels verbessert werden. Vorzugsweise ist die der ersten Oberfläche abgewandte zweite Oberfläche der transparenten Maßverkörperung flächenbündig mit derjenigen Oberfläche des ersten Schenkels ausgebildet, in der die Nut zur Aufnahme der transparenten Maßverkörperung eingebracht ist. Besonders bevorzugt ist die zweite Oberfläche der transparenten Maßverkörperung vertieft, also zurückversetzt, gegenüber derjenigen Oberfläche des ersten Schenkels angeordnet, in der die Nut eingebracht ist.

Bevorzugt ist vorgesehen, dass ein Querschnitt der transparenten Maßverkörperung und ein Querschnitt der Nut in einer quer zur Bewegungsachse ausgerichteten Querschnittsebene geometrisch ähnlich oder geometrisch identisch sind. Eine derartige Ausgestaltung der Querschnitte der transparenten Maßverkörperung und der Nut ist insbesondere dann von Interesse, wenn die transparente Maßverkörperung stoffschlüssig in die Nut im ersten Schenkel eingebracht werden soll. Vorzugsweise ist die transparente Maßverkörperung in die Nut eingeklebt, wobei ein Klebespalt durch eine geringfügige Querschnittsdifferenz zwischen dem Querschnitt der transparenten Maßverkörperung und dem Querschnitt der Nut gewährleistet wird. In diesem Fall liegt eine geometrische Ähnlichkeit zwischen dem Querschnitt der transparenten Maßverkörperung und dem Querschnitt der Nut vor. Im Fall einer geometrischen Identität kann vorgesehen sein, dass die transparente Maßverkörperung in die Nut eingepresst ist und dadurch kraftschlüssig in der Nut gehalten wird.

Vorteilhaft ist es, wenn ein Querschnitt der Nut und der transparenten Maßverkörperung in einer quer zur Bewegungsachse ausgerichteten Querschnittsebene T-förmig ausgebildet sind. Hierdurch bildet die Nut, die im Bodenbereich breiter als in einem Bereich nahe der Oberfläche des ersten Schenkels ausgebildet ist, einen quer zur Bewegungsachse wirksamen Hinterschnitt. Dementsprechend kann die transparente Maßverkörperung im Zuge einer ein Schiebebewegung längs der Bewegungsachse in die Nut montiert werden und ist im Hinblick auf Raumrichtungen quer zur Bewegungsachse formschlüssig in der Nut aufgenommen. Hierdurch lässt sich eine besonders zuverlässige Festlegung der transparenten Maßverkörperung in der Nut verwirklichen.

Bei einer vorteilhaften Weiterbildung der Erfindung ist vorgesehen, dass die transparente Maßverkörperung aus einem amorphen, vorzugsweise biegsamen, Material, insbesondere Glas oder Polycarbonat oder Polystyrol, hergestellt ist. Die transparente Maßverkörperung dient einerseits als Träger für die Markierungen, die die Skale bilden und andererseits als Schutz für die Skale, die auf der ersten Oberfläche der transparenten Maßverkörperung angebracht ist und somit durch die Materialstärke der transparenten Maßverkörperung vor mechanischen Einflüssen, die bei der Benutzung des Messschiebers auftreten können, geschützt ist. Vorzugsweise ist die transparente Maßverkörperung aus einem biegsamen Material hergestellt, so dass auch Biegebelastungen, die auf den ersten Schenkel ausgeübt werden, nicht unmittelbar zu einer Beschädigung der transparenten Maßverkörperung führen. Alternativ ist vorgesehen, dass die transparente Maßverkörperung aus einem gestaltfesten Material hergestellt ist, wodurch eine Montage der transparenten Maßverkörperung in die Nut im ersten Schenkel erleichtert wird. Besonders bevorzugt ist die transparente Maßverkörperung aus einem farblosen Material oder einem geringfügig eingefärbten Material, hergestellt. Exemplarisch kann ferner vorgesehen sein, dass die transparente Maßverkörperung als Verbundmaterial aus unterschiedlichen Materialschichten hergestellt ist, um die Maßhaltigkeit der transparenten Maßverkörperung auch bei unterschiedlichen Temperaturen und variierenden Krafteinflüssen zu gewährleisten.

Bei einer vorteilhaften Weiterbildung der Erfindung ist vorgesehen, dass auf die erste Oberfläche der transparenten Maßverkörperung eine Reflexionsschicht aufgebracht, insbesondere aufgeklebt, ist. Die Aufgabe der Reflexionsschicht, die bei der Montage der transparenten Maßverkörperung auf den ersten Schenkel zwischen dem ersten Schenkel und der Skale angeordnet ist, liegt darin, eine Ablesbarkeit der Skale durch die transparente Maßverkörperung hindurch zu verbessern. Vorzugsweise ist die Reflexionsschicht aus einer gestaltlosen Masse abgeschieden, beispielsweise durch Bedampfen der ersten Oberfläche der transparenten Maßverkörperung. Besonders bevorzugt handelt es sich bei der Reflexionsschicht um eine Folie aus einem reflektierenden Material, die auf die erste Oberfläche der transparenten Maßverkörperung aufgebracht, insbesondere aufgeklebt, ist.

Erfindungsgemäß ist vorgesehen, dass eine Dicke der transparenten Maßverkörperung wenigstens 20 Prozent der Dicke des ersten Schenkels beträgt. Hierdurch wird sichergestellt, dass die transparente Maßverkörperung auch bei einem Einsatz des Messschiebers unter rauen Umgebungsbedingungen eine lange Lebensdauer aufweist, die durch die Eigenstabilität der transparenten Maßverkörperung gewährleistet wird.

Vorteilhaft ist es, wenn die Skale in einem Siebdruckverfahren oder in einem kombinierten Gravier- und Einlassverfahren oder in einem Laserbeschriftungsverfahren aufgebracht ist. Bei der Aufbringung im Siebdruckverfahren wird die erste Oberfläche der transparenten Maßverkörperung mit einer geeigneten Farbe gedruckt, die durch ein strukturiertes Sieb auf die erste Oberfläche aufgetragen wird, um die Skale zu bilden. Anschließend erfolgt ein Trocknungsvorgang für die Farbe, wodurch in kostengünstiger Weise eine Aufbringung der Skale auf die erste Oberfläche der transparenten Maßverkörperung ermöglicht wird. Alternativ ist vorgesehen, dass zunächst eine spanabhebende Gravur der ersten Oberfläche der transparenten Maßverkörperung erfolgt und in einem nachfolgenden Schritt ein Farbauftrag auf die erste Oberfläche der transparenten Maßverkörperung vorgenommen wird. Überschüssige Farbe wird anschließend entfernt, so dass die aufgebrachte Farbe ausschließlich in den vertieften, gravierten Bereichen verbleibt, wodurch eine besonders kontrastreiche Einbringung der Skale in die transparente Maßverkörperung ermöglicht wird. Bei einer alternativen Ausführungsform ist vorgesehen, eine Laserbeschriftung der transparenten Maßverkörperung zur Aufbringung der Skale vorzunehmen, hierbei wird ein vorteilhafter Kompromiss zwischen Fertigungskosten und Ablesbarkeit der Skale ermöglicht.

Bevorzugt ist vorgesehen, dass der Grundkörper und/oder der Messarm zumindest abschnittsweise aus einem Kunststoffmaterial hergestellt sind. Hierdurch kann eine Gewichtsoptimierung für den Messschieber vorgenommen werden, bei der diejenigen Bereiche des Grundkörpers und/oder des Messarms aus Kunststoff hergestellt werden, die entweder kein hohen mechanischen Belastungen erfahren oder die ohne Zugeständnisse an die Form und Funktion des Messschiebers in einer Weise gestaltet werden können, die auch bei einer Ausführung als Kunststoffteil eine ausreichende mechanische Festigkeit gewährleistet.

Vorzugsweise ist vorgesehen, dass der zweite Schenkel eine, insbesondere aus Metall hergestellte, erste Messklinge umfasst. Die Messklinge ist derjenige Bereich des zweiten Schenkels, der in unmittelbarem Kontakt mit dem zu messenden Gegenstand steht und daher einerseits möglichst verschleißfest und andererseits möglichst schlank gestaltet sein sollte. Vorzugsweise ist die erste Messklinge aus Metall, insbesondere Stahl oder Aluminium, hergestellt. Beispielhaft ist vorgesehen, dass eine dem Messarm zugewandte Oberfläche der Messklinge eben ausgebildet ist und eine Flächennormale dieser Oberfläche parallel zur Bewegungsachse ausgerichtet ist.

In weiterer Ausgestaltung der Erfindung ist vorgesehen, dass der Messarm einen Handgriff, der den ersten Schenkel des Grundkörpers umgreift, und eine, insbesondere aus Metall hergestellte, zweite Messklinge umfasst. Der am Messarm ausgebildete Handgriff dient zur einfachen Bedienung des Messschiebers und wird von einem Bediener mit der Hand, vorzugsweise vollständig, umgriffen. Hierdurch kann der Messarm bei gleichzeitigem Festhalten des ersten Schenkels oder des zweiten Schenkels mit der anderen Hand vom Benutzer längs des Grundkörpers verschoben werden kann, um die Einstellung des Abstands zwischen Messarm und zweitem Schenkel zu bewerkstelligen. Dabei ist vorgesehen, dass der Handgriff vom ersten Schenkel des Grundkörpers durchsetzt wird, so dass bei einer Relativbewegung zwischen dem Handgriff und dem ersten Schenkel des Grundkörpers eine vorteilhafte Verschiebbarkeit des Handgriffs gegenüber dem ersten Schenkel gewährleistet ist. Dem Messarm ist eine zweite Messklinge zugeordnet, die zur Anlage an dem zu messenden Gegenstand vorgesehen ist und die vorzugsweise aus Metall hergestellt ist. Besonders bevorzugt ist eine der ersten Messklinge zugewandte, insbesondere ebene, Oberfläche an der zweiten Messklinge derart ausgerichtet, dass die Flächennormale dieser Oberfläche parallel zur Bewegungsachse verläuft.

Vorteilhaft ist es, wenn die zweite Messklinge beweglich am Handgriff aufgenommen ist und wenn der zweiten Messklinge Einstellmittel zugeordnet sind, die für eine Einstellung einer Relativposition der Messklinge gegenüber dem Handgriff ausgebildet sind. Vorzugsweise ist die zweite Messklinge schwenkbeweglich um eine Schwenkachse, die quer zur Bewegungsachse ausgerichtet ist oder linearbeweglich in einer Bewegungsebene, die parallel zur Bewegungsachse ausgerichtet ist, beweglich am Handgriff aufgenommen. Hierdurch kann eine Justierung der Ausrichtung der zweiten Messklinge gegenüber der ersten Messklinge vorgenommen werden. Um die Justierung der zweiten Messklinge gegenüber der ersten Messklinge zu vereinfachen, sind zwischen dem Handgriff und der zweiten Messklinge Einstellmittel ausgebildet, die werkzeuglos oder mit geeigneten Werkzeug eine entsprechende Einstellung sowie vorzugsweise auch eine Festlegung der Orientierung der zweiten Messklinge gegenüber der ersten Messklinge ermöglichen.

Eine vorteilhafte Ausführungsform der Erfindung ist in der Zeichnung dargestellt. Hierbei zeigt:
- Figur 1: eine Vorderansicht auf einen Messschieber mit einem Grundkörper, der eine Skale umfasst und an dem ein Messarm mit einem Handgriff ausgebildet ist,
- Figur 2: eine Schnittdarstellung durch eine erste Variante eines ersten Schenkels des Messschiebers gemäß der Figur 2,
- Figur 3: eine rückwärtige Ansicht einer transparenten Maßverkörperung zur Verwendung in der Variante gemäß der Figur 2, und
- Figur 4: eine Schnittdarstellung einer zweiten Variante eines ersten Schenkels des Messschiebers gemäß der Figur 1.

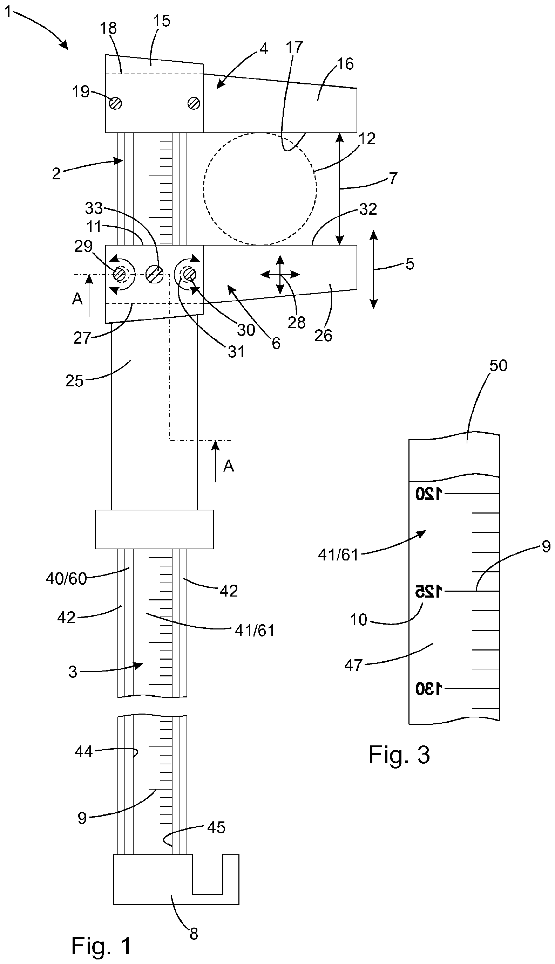

Ein in der Figur 1 gezeigter, auch als Messkluppe bezeichneter Messschieber 1 ist zur Ermittlung eines Längenmaßes ausgebildet und kann beispielsweise im Forstbereich zur Ermittlung von Stammdurchmessern oder Astdurchmessern eingesetzt werden. Der Messschieber 1 umfasst einen Grundkörper 2 mit einem ersten Schenkel 3 sowie einem quer zum ersten Schenkel 3 ausgerichteten zweiten Schenkel 4. Am ersten Schenkel 3 ist linearbeweglich längs einer Bewegungsachse 5 ein Messarm 6 angeordnet, der zusammen mit dem zweiten Schenkel 4 eine Längenmessstrecke 7 begrenzt. An einem dem zweiten Schenkel 4 abgewandten Endbereich des ersten Schenkels 3 ist rein exemplarisch einen hakenförmig ausgebildetes Anschlussstück 8 angeordnet, das zum einen eine Schutzfunktion für den ersten Schenkel 3 im Hinblick auf mechanische Belastungen gewährleistet und andererseits durch die hakenförmige Konstruktion ein vorteilhaftes Verstauen des Messschiebers 1 unterstützt.

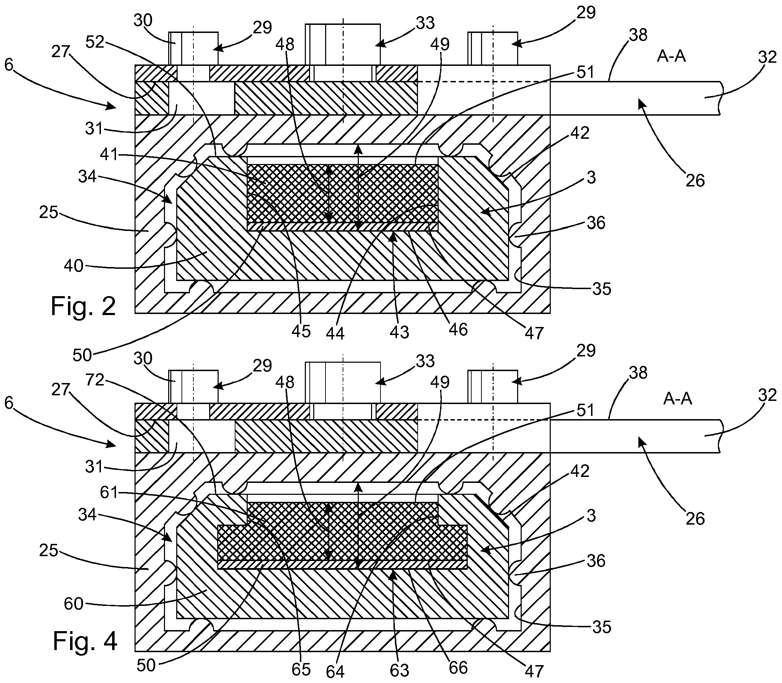

Beispielhaft ist vorgesehen, dass der erste Schenkel 3 ein längs der Bewegungsachse erstrecktes, in den Figuren 2 und 4 in alternativen Ausführungsformen gezeigtes Profilteil 40 bzw. 60 sowie eine dem jeweiligen Profilteil 40 bzw. 60 zugeordnete transparente Maßverkörperung 41 bzw. 61 umfasst.

Wie aus der Darstellung der Figur 1 entnommen werden kann und in der Figur 3 näher gezeigt ist, umfasst die jeweilige transparente Maßverkörperung 41 bzw. 61 eine Skale 9, die rein exemplarisch als Abfolge von kürzeren und längeren, jeweils quer zur Bewegungsachse 5 ausgerichteten und in gleichmäßiger Teilung angeordneten Strichen ausgebildet ist. Dabei sind den längeren Strichen jeweils Maßzahlen zugeordnet, um eine rasche Ablesbarkeit der Skale 9 zu ermöglichen. Die Skale 9 ist derart am ersten Schenkel 3 angeordnet, dass eine tatsächliche Länge der Längenmessstrecke 7 zwischen dem Messarm 6 und dem zweiten Schenkel 4 in der Weise von einer Oberkante 11 des Messarm 6 abgedeckt wird, dass die Oberkante 11 genau denjenigen Teil der Skale 9 zur Ablesung freigibt, der der Längenmessstrecke 7 entspricht. Beispielhaft ist vorgesehen, dass der zweite Schenkel 4 und der Messarm 6 in unmittelbaren Kontakt zu einem zwischen dem zweiten Schenkel 4 und dem Messarm 6 aufgenommenen Objekt 12, bei dem es sich beispielsweise um einen Baumstamm handeln kann, gebracht wird. Anschließend erfolgt unter Einhaltung des sich hierbei ergebenden Abstands zwischen dem Messarm 6 und dem zweiten Schenkel 4, der durch die Längenmessstrecke 7 repräsentiert wird, eine Ablesung der Skale 9 durch einen Benutzer, der die Skale 9 innerhalb des vom Messarm 6 freigegebenen Bereichs an der Oberkante 11 des Messarm 6 ablesen kann.

Rein exemplarisch ist vorgesehen, dass der zweite Schenkel 4 ein aus Kunststoff hergestelltes Verbindungsteil 15 sowie eine am Verbindungsteil 15 festgelegte, insbesondere aus Metall hergestellte, erste Messklinge 16 umfasst. Beispielhaft ist die Messklinge 16 aus einem plattenförmigen Material, insbesondere als Planparallelplatte, ausgebildet und umfasst eine dem Messarm 6 zugewandte Schmalseite 17, die eben ausgebildet ist und die quer, also rechtwinklig, zur Bewegungsachse 5 ausgerichtet ist. Dementsprechend ist die Bewegungsachse 5 parallel zur nicht eingezeichneten Flächennormale für die Schmalseite 17 ausgerichtet. Die Messklinge 16 ist rein exemplarisch in einer schlitzförmigen Ausnehmung 18 des Verbindungsteils 15 aufgenommen, wodurch durch Formschluss eine Festlegung der Messklinge 16 in mehreren Raumrichtungen gewährleistet ist. Um eine vollständige ortsfeste Verbindung zwischen der Messklinge 16 und dem Verbindungsspalt 15 zu gewährleisten, sind rein exemplarisch Befestigungsschrauben 19 vorgesehen, die das Verbindungsteil 15 und die Messklinge 16 durchsetzen und damit eine vollständig formschlüssige Festlegung der Messklinge 16 am Verbindungsteil 15 sicherstellen. Das Verbindungsteil 15 ist in nicht näher dargestellter Weise, beispielsweise ebenfalls durch nicht gezeigte Befestigungsschraube, am ersten Schenkel 3 festgelegt. Durch diese Maßnahmen wird eine zuverlässige Festlegung und Ausrichtung der Messklinge 16 gegenüber dem ersten Schenkel 3 gewährleistet.

Der Messarm 6 umfasst rein exemplarisch einen beispielhaft aus Kunststoff hergestellten Handgriff 25, der sich mit einer größten Erstreckung längs der Bewegungsachse 5 erstreckt und der vom ersten Schenkel 3 durchsetzt ist, wie dies insbesondere aus den Darstellungen der Figuren 2 und 4 zu entnehmen ist. Wie aus der Darstellung der Figur 1 hervorgeht, ist an einem dem zweiten Schenkel 4 zugewandten Endbereich des Handgriffs 25 eine zweite Messklinge 26 ausgebildet, die im Wesentlichen gleich wie die erste Messklinge 16 ausgeführt ist. Die Messklinge 26 ist in einer schlitzförmigen Ausnehmung 27 des Handgriffs 25 aufgenommen, wodurch eine Beschränkung einer Beweglichkeit der Messklinge 26 gegenüber dem Handgriff 25 auf Bewegungen in einer Bewegungsebene, die parallel zur Darstellungsebene der Figur 1 ausgerichtet ist, begrenzt wird. Diese Beweglichkeit der Messklinge 26 wird durch die Pfeilanordnung 28 symbolisiert. Da die Messklinge 26 gegenüber der Messklinge 16 einstellbar ausgebildet sein soll, sind zur Festlegung der Messklinge 26 am Handgriff 25 rein exemplarisch als Exzenterschrauben ausgebildete Befestigungsmittel 29 vorgesehen. Beispielhaft umfasst jedes Befestigungsmittel 29 einen Schraubenkopf 30, der von einer Oberfläche des Handgriffs 25 abragt und rein exemplarisch mit einem Schlitz zur Betätigung mit einem Schlitzschraubendreher versehen ist. Das jeweilige Befestigungsmittel 29 greift mit einem exzentrisch zum Schraubenkopf 30 angeordneten, rein exemplarisch kreisscheibenförmig ausgebildeten Verbindungsabschnitt 31 in eine kreiszylindrische, Ausnehmung 37 in der Messklinge 26 ein. Dementsprechend erfolgt bei einer Rotationsbewegung des jeweiligen Befestigungsmittels 29 eine Änderung der räumlichen Ausrichtung der Messklinge 26 in der Bewegungsebene, wie sie durch die Pfeilanordnung 28 repräsentiert ist. Somit können sowohl eine Winkelstellung einer Schmalseite 32 der zweiten Messklinge 26 gegenüber der Schmalseite 17 der ersten Messklinge 16 als auch eine Beabstandung zwischen den beiden Messklingen 16 und 26 eingestellt werden. Nach Durchführung dieser Einstellung kann eine Betätigung einer Sicherungsschraube 33 vorgesehen werden, die rein exemplarisch ausschließlich kraftschlüssig zwischen dem Handgriff 25 und der Messklinge 26 wirkt und eine Reibkraft auf eine Seitfläche 38 der zweiten Messklinge 26 ausübt.

Bei den in den Figuren 2 und 4 gezeigten Schnittdarstellungen handelt es sich jeweils um Varianten der die Ausführung des ersten Schenkels 3 des Grundkörpers 2. Beispielhaft ist bei den Varianten gemäß den Figuren 2 und 4 vorgesehen, dass der erste Schenkel 3 längs der Bewegungsachse 5 eine in der Darstellung der Figur 2 erkennbare rechteckige Profilierung aufweist, wobei rein exemplarisch vorgesehen ist, dass das Profilteil 40 an einer der Messklinge 26 zugewandten Oberseite jeweils mit einer Nase 42 versehen ist. Ferner ist im Profilteil 40 eine rein exemplarisch längs der Bewegungsachse 5 mit rechteckiger Profilierung ausgebildete Nut 43 eingebracht. Die Nut 43 weist gemäß der Darstellung der Figur 2 zwei jeweils eben ausgebildete, gegenüberliegend zueinander angeordnete und parallel zueinander ausgerichtete Seitenwände 44, 45 und einen ebenfalls eben ausgebildeten Bodenbereich 46 auf. Beispielhaft ist vorgesehen, dass der Bodenbereich 46 ebenfalls als ebene Fläche ausgebildet ist.

In der Nut 43 ist die transparente Maßverkörperung 41 aufgenommen, die einen geometrisch ähnlichen Querschnitt wie die Nut 43 aufweist und rein exemplarisch rechteckig profiliert ist. Die transparente Maßverkörperung 41 ist beispielhaft aus einem amorphen Kunststoffmaterial wie Polystyrol oder Polycarbonat ausgebildet. Eine erste Oberfläche 47 der transparenten Maßverkörperung 41 ist gegenüberliegend zum Bodenbereich 46 angeordnet. Ferner ist eine Dicke 48 der transparenten Maßverkörperung 41 geringfügig kleiner als eine Tiefe 49 der Nut 43 gewählt. Beispielhaft ist vorgesehen, dass auf die erste Oberfläche 47 eine Reflektorfolie 50 aufgebracht ist, die eine Ablesbarkeit der auf die erste Oberfläche 47 aufgebrachten Skale 9 verbessert. Dabei sind die Dicke 48 der transparenten Maßverkörperung sowie die nicht bezeichnete Dicke der Reflektorfolie 50 derart gewählt, dass eine der ersten Oberfläche 47 abgewandte zweite Oberfläche 51 der transparenten Maßverkörperung 41 geringfügig gegenüber der Oberseite 52 des Profilteils 40 zurückversetzt ist. Hierdurch ist ein gewisser Schutz vor mechanischen Belastungen für die transparente Maßverkörperung 41 gewährleistet.

Wie der Darstellung der Figur 2 ferner entnommen werden kann, durchsetzt der erste Schenkel 3 des Grundkörpers 2 den Handgriff 25. Rein exemplarisch ist vorgesehen, dass der Handgriff 25 den ersten Schenkel 3 vollständig umgreift. Eine Ausnehmung 34 im Handgriff 25 ist derart ausgebildet ist, dass an einer Innenoberfläche 35 der Ausnehmung 34 mehrere jeweils längs der Bewegungsachse 5 erstreckte, insbesondere mit halbkreisförmiger Profilierung ausgebildete Führungsleisten 36 vorgesehen sind, die jeweils an Außenoberflächen 53 des Profilteils 40 linienförmig anliegen. Die Führungsleisten 36 gewährleisten eine gleitbewegliche und mit genau einem Freiheitsgrad der Bewegung längs der Bewegungsachse 5 verwirklichte Lagerung zwischen dem Handgriff 25 und dem ersten Schenkel 3. Vorzugsweise ist vorgesehen, dass der Handgriff 25 aus einem Kunststoffmaterial mit guten Gleiteigenschaften hergestellt ist, so dass eine vorteilhafte Gleitpaarung mit dem insbesondere aus Stahl oder Aluminium ausgebildeten Profilteil 40 sichergestellt ist und auch nach einer Vielzahl von Verschiebevorgängen für den Handgriff 25 relativ zum ersten Schenkel 3 keine nennenswerte Abnutzung der Führungsleisten 36 auftritt.

Aus der Darstellung der Figur 3 ist rein schematisch zu sehen, dass die Skale 9 spiegelverkehrt auf die erste Oberfläche 47 der transparenten Maßverkörperung 41 aufgebracht ist. Hierzu kann wahlweise eine Bedruckung, insbesondere im Siebdruckverfahren, oder eine Gravur mit nachfolgender Einfärbung der vertieften Gravierstellen oder eine Laserbeschriftung vorgesehen werden. Ergänzend ist auf die erste Oberfläche 47 eine Reflektorfolie 50 aufgebracht. Bei einer nicht näher dargestellten Alternative für die Herstellung der transparenten Maßverkörperung ist vorgesehen, dass die Skale auf die Reflektorfolie aufgedruckt ist und diese auf die erste Oberfläche der transparenten Maßverkörperung aufgebracht, insbesondere aufgeklebt, ist.

Bei der zweiten Variante für die Ausführung des ersten Schenkels 3, wie sie in der Figur 4 dargestellt ist, ist das Profilteil 60 mit einer Nut 63 versehen, die T-förmig profiliert ist, wobei im Bereich der Oberseite 72 ein geringerer Abstand zwischen den Seitenwänden 64, 65 als benachbart zum Bodenbereich 66 der Nut 63 vorliegt. Hierdurch bildet das Profilteil 60 für die transparente Maßverkörperung 61, die eine zur Nut 63 geometrisch ähnlich ausgebildete Profilierung längs der Bewegungsachse 5 aufweist, einen Hinterschnitt, womit eine Festlegung der transparenten Maßverkörperung 61 im Profilteil 60 unterstützt wird. Beispielhaft ist vorgesehen, dass eine Montage der transparenten Maßverkörperung 61 durch Einschieben der transparenten Maßverkörperung 61 in einer Richtung längs der Bewegungsachse 5 in die Nut 63 erfolgt und eine Festlegung der transparenten Maßverkörperung 61 am Profilteil 60 mit Hilfe des Abschlussstücks 8 vorgesehen ist.

## Patentansprüche

1. Messschieber (1) zur Ermittlung eines Längenmaßes, mit einem Grundkörper (2), der einen ersten Schenkel (3) und einen zweiten Schenkel (4) umfasst, die L-förmig zueinander ausgerichtet sind, wobei der erste Schenkel (3) länger als der zweite Schenkel (4) ausgebildet ist und bereichsweise mit einer Skale (9) versehen ist, sowie mit einem linearbeweglich längs einer Bewegungsachse (5) am ersten Schenkel (3) gelagerten Messarm (6), der zusammen mit dem zweiten Schenkel (4) eine Längenmessstrecke (7) begrenzt, wobei die Skale (9) auf eine erste Oberfläche (47) einer transparenten Maßverkörperung (41; 61) aufgebracht ist und wobei die transparente Maßverkörperung (41; 61) mit der ersten Oberfläche (47) auf den ersten Schenkel (3) aufgebracht ist, **dadurch gekennzeichnet, dass** eine Dicke (48) der transparenten Maßverkörperung (41; 61) wenigstens 20 Prozent der Dicke des ersten Schenkels (3) beträgt.

2. Messschieber (1) nach Anspruch 1, **dadurch gekennzeichnet, dass** der erste Schenkel (3) eine längs der Bewegungsachse (5) erstreckte, zur Aufnahme der transparenten Maßverkörperung (41; 61) ausgebildete Nut (43; 63) aufweist, wobei die erste Oberfläche (47) der transparenten Maßverkörperung (41; 61) gegenüberliegend zu einem Bodenbereich (46; 66) der Nut (43; 63) angeordnet ist.

3. Messschieber (1) nach Anspruch 1 oder 2, **dadurch gekennzeichnet, dass** ein Querschnitt der transparenten Maßverkörperung (41; 61) und ein Querschnitt der Nut (43; 63) in einer quer zur Bewegungsachse (5) ausgerichteten Querschnittsebene geometrisch ähnlich oder geometrisch identisch sind.

4. Messschieber (1) nach Anspruch 1, 2 oder 3, **dadurch gekennzeichnet, dass** ein Querschnitt der Nut (43; 63) und der transparenten Maßverkörperung (41; 61) in einer quer zur Bewegungsachse (5) ausgerichteten Querschnittsebene T-förmig ausgebildet sind.

5. Messschieber (1) nach Anspruch 1, 2, 3 oder 4, **dadurch gekennzeichnet, dass** die transparente Maßverkörperung (41; 61) aus einem amorphen, vorzugsweise biegsamen, Material, insbesondere Glas oder Polycarbonat oder Polystyrol, hergestellt ist.

6. Messschieber (1) nach Anspruch 5, **dadurch gekennzeichnet, dass** auf die erste Oberfläche (47) der transparenten Maßverkörperung (41; 61) eine Reflexionsschicht (50) aufgebracht, insbesondere aufgeklebt, ist.

7. Messschieber (1) nach einem der vorhergehenden Ansprüche, **dadurch gekennzeichnet, dass** die Skale (9) in einem Siebdruckverfahren oder in einem kombinierten Gravier- und Einlassverfahren oder in einem Laserbeschriftungsverfahren aufgebracht ist.

8. Messschieber (1) nach einem der vorhergehenden Ansprüche, **dadurch gekennzeichnet, dass** der Grundkörper (2) und/oder der Messarm (6) zumindest abschnittsweise aus einem Kunststoffmaterial hergestellt sind.

9. Messschieber (1) nach einem der vorhergehenden Ansprüche, **dadurch gekennzeichnet, dass** der zweite Schenkel (4) eine, insbesondere aus Metall hergestellte, erste Messklinge (16) umfasst.

10. Messschieber (1) nach einem der vorhergehenden Ansprüche, **dadurch gekennzeichnet, dass** der Messarm (6) einen Handgriff (25), der den ersten Schenkel (3) des Grundkörpers (2) umgreift, und eine, insbesondere aus Metall hergestellte, zweite Messklinge (26) umfasst.

11. Messschieber nach Anspruch 10, **dadurch gekennzeichnet, dass** die zweite Messklinge (26) beweglich am Handgriff (25) aufgenommen ist und dass der zweiten Messklinge (26) Einstellmittel (29) zugeordnet sind, die für eine Einstellung einer Relativposition der zweiten Messklinge (26) gegenüber dem Handgriff (25) ausgebildet sind.

## Claims

1. Caliper (1) for determining a measure of length, having a base body (2) which comprises a first limb (3) and a second limb (4) which are aligned in an L-shape with respect to one another, the first limb (3) being longer than the second limb (4) and being provided in some regions with a scale (9), and with a measuring arm (6) which is mounted on the first limb (3) so as to be linearly movable along an axis of movement (5) and which, together with the second limb (4), delimits a length measuring section (7), the scale (9) being applied to a first surface (47) of a solid measure (41; 61) made from transparent material, and the solid measure (41; 61) being applied with the first surface (47) to the first limb (3), **characterized in that** a thickness (48) of the solid measure (41; 61) is at least 20 percent of the thickness of the first limb (3).

2. Caliper (1) according to claim 1, **characterized in that** the first leg (3) has a groove (43; 63) which extends along the axis of movement (5) and is designed to receive the solid measure (41; 61), the first surface (47) of the solid measure (41; 61) being arranged opposite a bottom region (46; 66) of the groove (43; 63).

3. Caliper (1) according to claim 1 or 2, **characterized in that** a cross-section of the solid measure (41; 61) and a cross-section of the groove (43; 63) are geometrically similar or geometrically identical in a cross-sectional plane aligned transversely to the axis of movement (5).

4. Caliper (1) according to claim 1, 2 or 3, **characterized in that** a cross-section of the groove (43; 63) and of the solid measure (41; 61) are T-shaped in a cross-sectional plane aligned transversely to the axis of movement (5).

5. Caliper (1) according to claim 1, 2, 3 or 4, **characterized in that** the solid measure (41; 61) is made of an amorphous, preferably flexible, material, in particular glass or polycarbonate or polystyrene.

6. Caliper (1) according to claim 5, **characterized in that** a reflective layer (50) is applied, in particular glued, to the first surface (47) of the solid measure (41; 61).

7. Caliper (1) according to one of the preceding claims, **characterized in that** the scale (9) is applied in a screenprinting process or in a combined engraving and incising process or in a laser inscription process.

8. Caliper (1) according to one of the preceding claims, **characterized in that** the base body (2) and/or the measuring arm (6) are made at least partially from a plastic material.

9. Caliper (1) according to one of the preceding claims, **characterized in that** the second leg (4) comprises a first measuring blade (16), in particular made of metal.

10. Caliper (1) according to one of the preceding claims, **characterized in that** the measuring arm (6) comprises a handle (25), which engages around the first leg (3) of the base body (2), and a second measuring blade (26), in particular made of metal.

11. Caliper according to claim 10, **characterized in that** the second measuring blade (26) is movably received on the handle (25) and **in that** adjusting means (29) are associated with the second measuring blade (26), which are designed for adjusting a relative position of the second measuring blade (26) with respect to the handle (25).

## Revendications

1. Pied à coulisse (1) pour la détermination d'une dimension longitudinale, avec un corps de base (2), qui comprend une première branche (3) et une deuxième branche (4), qui sont orientées l'une par rapport à l'autre en forme de L, dans lequel la première branche (3) est réalisée de manière plus longue que la deuxième branche (4) et est pourvue par endroits d'une graduation (9), ainsi qu'avec un bras de mesure (6) monté de manière mobile linéairement le long d'un axe de mouvement (5) sur la première branche (3), qui délimite conjointement avec la deuxième branche (4) un trajet de mesure de longueur (7), dans lequel la graduation (9) est appliquée sur une première surface (47) d'une mesure matérialisée transparente (41 ; 61) et dans lequel la mesure matérialisée transparente (41 ; 61) est appliquée avec la première surface (47) sur la première branche (3), **caractérisé en ce qu'**une épaisseur (48) de la mesure matérialisée transparente (41 ; 61) atteint au moins 20 pourcent de l'épaisseur de la première branche (3).

2. Pied à coulisse (1) selon la revendication 1, **caractérisé en ce que** la première branche (3) présente une rainure (43 ; 63) étendue le long de l'axe de mouvement (5), réalisée pour la réception de la mesure matérialisée transparente (41 ; 61), dans lequel la première surface (47) de la mesure matérialisée transparente (41 ; 61) est disposée à l'opposé d'une zone de fond (46 ; 66) de la rainure (43 ; 63).

3. Pied à coulisse (1) selon la revendication 1 ou 2, **caractérisé en ce qu'**une section transversale de la mesure matérialisée transparente (41 ; 61) et une section transversale de la rainure (43 ; 63) sont géométriquement semblables ou géométriquement identiques dans un plan de section transversale orienté transversalement par rapport à l'axe de mouvement (5).

4. Pied à coulisse (1) selon la revendication 1, 2 ou 3, **caractérisé en ce qu'**une section transversale de la rainure (43 ; 63) et de la mesure matérialisée transparente (41 ; 61) sont réalisées en forme de T dans un plan de section transversale orienté transversalement par rapport à l'axe de mouvement (5).

5. Pied à coulisse (1) selon la revendication 1, 2, 3 ou 4, **caractérisé en ce que** la mesure matérialisée transparente (41 ; 61) est fabriquée à partir d'un matériau amorphe, de préférence flexible, en particulier du verre ou polycarbonate ou polystyrène.

6. Pied à coulisse (1) selon la revendication 5, **caractérisé en ce qu'**une couche réfléchissante (50) est appliquée, en particulier collée, sur la première surface (47) de la mesure matérialisée transparente (41 ; 61).

7. Pied à coulisse (1) selon l'une quelconque des revendications précédentes, **caractérisé en ce que** la graduation (9) est appliquée dans un procédé de sérigraphie ou dans un procédé de gravure et d'introduction combiné ou dans un procédé de marquage au laser.

8. Pied à coulisse (1) selon l'une quelconque des revendications précédentes, **caractérisé en ce que** le corps de base (2) et/ou le bras de mesure (6) sont fabriqués au moins sur certaines parties à partir d'une matière plastique.

9. Pied à coulisse (1) selon l'une quelconque des revendications précédentes, **caractérisé en ce que** la deuxième branche (4) comprend une première lame de mesure (16), en particulier fabriquée en métal.

10. Pied à coulisse (1) selon l'une quelconque des revendications précédentes, **caractérisé en ce que** le bras de mesure (6) comprend une poignée (25), qui enserre la première branche (3) du corps de base (2), et une deuxième lame de mesure (26), en particulier fabriquée en métal.

11. Pied à coulisse selon la revendication 10, **caractérisé en ce que** la deuxième lame de mesure (26) est reçue de manière mobile sur la poignée (25) et que des moyens de réglage (29), qui sont réalisés pour un réglage d'une position relative de la deuxième lame de mesure (26) par rapport à la poignée (25), sont associés à la deuxième lame de mesure (26).
